# EUROPEAN PATENT SPECIFICATION

(11) **EP 2 373 514 B1**
(45) Date of publication and mention of the grant of the patent: **15.03.2017**
(21) Application number: 09830655.8
(22) Date of filing: 24.11.2009
(51) Int. Cl.: B60K 15/077, F02M 37/02, F02M 37/00

(54) **ARRANGEMENT FOR TRANSFERRING FUEL FROM ONE OR SEVERAL SECONDARY TANKS TO A MAIN TANK**
ANORDNUNG ZUR ÜBERTRAGUNG EINES KRAFTSTOFFS AUS EINEM ODER MEHREREN SEKUNDÄRTANKS IN EINEN HAUPTTANK
AGENCEMENT POUR TRANSFÉRER DU CARBURANT D UN OU DE PLUSIEURS RÉSERVOIRS SECONDAIRES À UN RÉSERVOIR PRINCIPAL

(30) Priority: 05.12.2008 SE 0850118
(43) Date of publication of application: 12.10.2011
(73) Proprietor: Scania CV AB, 151 87 Södertälje (SE)
(72) Inventor: FAGERHOF, Henrik, S-144 33 Rönninge (SE)
(74) Representative: Scania CV AB
(86) International application number: PCT/SE2009/051323
(87) International publication number: WO 2010/064972

(56) References cited:
- EP-A1- 0 228 176
- WO-A1-2008/105721
- DE-A1- 2 440 905
- US-A1- 2002 148 510
- US-A1- 2002 148 510
- US-A1- 2007 151 610

## Description

### Technical field

The invention relates to an arrangement for transfer of fuel from one or more secondary tanks to a main tank according to the preamble of claim 1.

The invention relates also to a vehicle comprising one or more arrangements.

### Background

The majority of vehicles which are used to carry, for example, persons and goods are powered by some kind of combustion engine in which fuel in liquid form is converted to the necessary kinetic energy. The vehicle is therefore provided with one or more fuel tanks intended to accommodate sufficient fuel for a predetermined period of use of the vehicle. Vehicles intended to travel long distances, e.g. trucks, may therefore be provided with a plurality of mutually interconnected tanks to make it possible to carry large amounts of fuel and hence lengthen the interval between necessary refuellings.

The various tanks are usually interconnected by hoses which run between the so-called secondary tanks and a primary tank from which fuel is conveyed to the engine. However, these hoses tend to become obstructed after a period of use, which means that there will be an amount of fuel which cannot be used for operating the engine. If this occurs, the vehicle's fuel indication will indicate that there is more fuel remaining than can actually be used for operating the vehicle, which may lead to serious consequences if the available fuel comes to an end when the vehicle is far from any assistance facility or suitable refuelling location.

There is therefore a need for a reliable arrangement comprising at least two fuel tanks which provides assurance that all of the fuel put into the tanks can be used for operating the vehicle's engine.

DE 24 40 905 A1 discloses an arrangement for transfer of fuel from a secondary tank 8 to a main tank 9 according to the preamble of claim 1.

### Summary of the invention

The object of the present invention is to eliminate the above problems. The object is achieved by an arrangement for transfer of fuel from one or more secondary tanks to a main tank intended to contain fuel for an engine according to the independent claim.

The problems described above are solved by fuel being sucked from respective secondary tanks to the main tank instead of the previously applied solutions which rely on the levels in the tanks being equalised by siphon action. The suction action is provided by a venturi pipe connected along a line for return fuel which runs between the engine and the main tank. The line which draws fuel from the bottom of the respective secondary tank is connected to the venturi pipe's section which has a reduced cross-sectional area, resulting in an increased flow velocity for the return fuel through that section. The increased flow velocity generates a negative pressure in the transfer line, causing the fuel in the secondary tank to be sucked through the transfer line to the main tank. The use of a venturi pipe for the transfer of fuel is very advantageous in that the venturi pipe comprises no movable parts, which results in the arrangement being very operationally reliable. As fuel is continuously transferred to the main tank, the level in the main tank will be generally higher than in existing systems, which is also an advantage when the vehicle is used on steeply sloping running surfaces, since the supply of fuel to the engine will be more reliable. As a result of the fuel being drawn from the respective secondary tanks, the latter will be emptied almost completely, which means that the engine in the vehicle will be able to utilise almost all of the fuel carried, thereby increasing the distance which can be travelled between refuellings and minimising the amount of weight which the vehicle has to carry.

The arrangement may also be used for updating of already existing installations which suffer from the shortcomings mentioned above.

According to the invention, the transfer line or lines are each connected to the bottom of the respective secondary tank close to the latter's lowest position. Connecting the transfer tank close to the lowest position of the secondary tank provides assurance that almost all of the fuel in the tank will be transferred to the main tank even when the vehicle and hence the fuel in the tank are in motion or the vehicle is sloping so much that the position of the fuel in the respective secondary tanks is shifted.

According to the invention, a drain hose runs from the main tank to each secondary tank. This drain hose prevents the main tank from being overfilled after a period of use. The risk of overfilling is greatest when the fuel level in the tanks is high. Any positive pressure in the main tank might cause fuel to leak from the venting device situated in the upper portion of the tank or from any points where there is lack of tightness in the tank, e.g. at the connections of the lines.

According to the invention, the main tank and the secondary tank are situated at substantially the same height and the drain hose runs from the bottom of the main tank to the bottom of the respective secondary tank, thereby creating good conditions for equalisation of the levels in the tanks by siphon action.

According to the invention, a substantially vertically directed pipe is so connected in each secondary tank to the connection of the drain line in the bottom of the secondary tank that the outlet of the line is relocated somewhat upwards relative to the bottom of the respective secondary tank. This embodiment is very advantageous in that the levels in the main tank and the secondary tanks will be substantially the same until the fuel level in the main tank becomes lower than the level at which the end of the pipe is situated. When the level becomes lower than the end of the pipe, no more fuel will drain from the main tank to the respective secondary tank, which means that the contents of the secondary tank or tanks will be transferred to the main tank. The risk of the main tank overflowing is thus eliminated in a simple way. The length of the pipe will with advantage be at least one-seventh of the height of the secondary tank to provide assurance that the advantages described above are achieved.

The present invention relates also to a vehicle provided with an arrangement for transfer of fuel from one or more secondary tanks to a main tank.

### Brief description of the drawings

The invention is explained in more detail below with reference to the drawings, in which:
Figure 1 depicts an example of an arrangement comprising one secondary tank.
Figure 2 depicts an arrangement according to the invention.
Figure 3 depicts schematically a venturi pipe.

### Detailed description of the invention

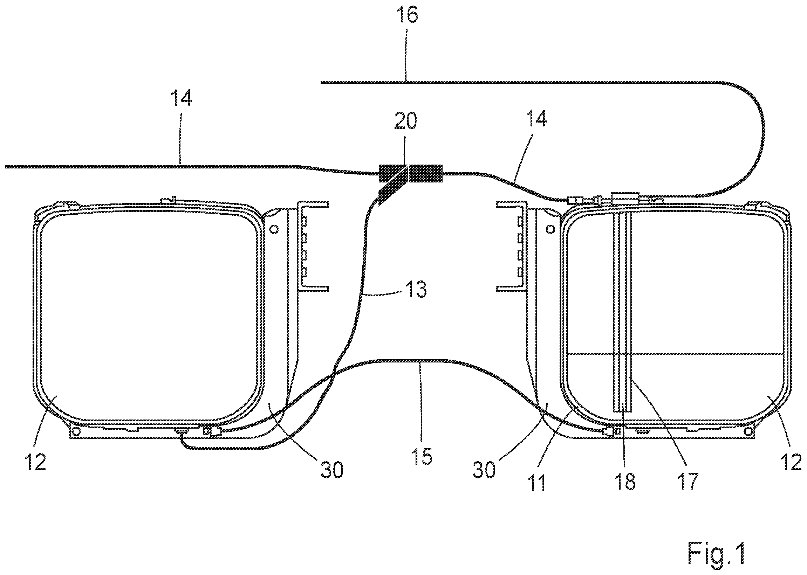

Figure 1 depicts an example of an arrangement.

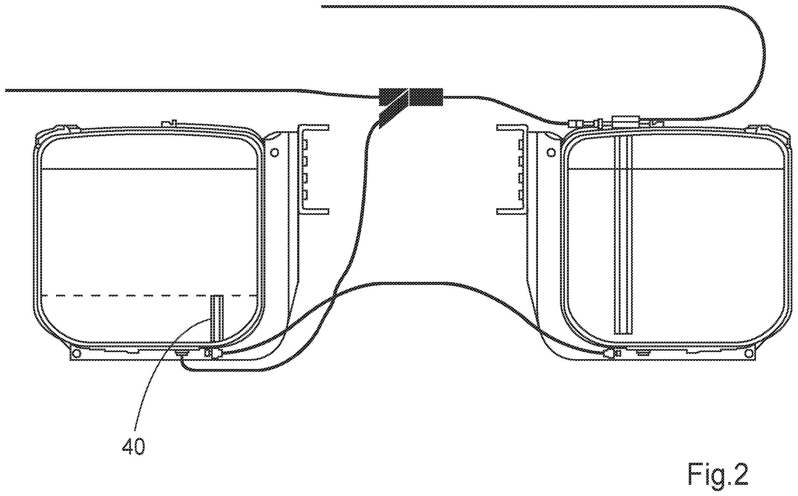

The arrangement comprises a main fuel tank 11 intended to contain fuel for an engine which is, for example, situated in a vehicle, and a secondary tank 12 likewise intended to contain fuel and thereby increase the total amount of fuel which the vehicle can carry. The main fuel tank 11 and the secondary tank 12 in the embodiments depicted in Figures 1 and 2 are situated at substantially the same height, which is also usually the case in existing fuel systems for vehicles such as trucks. The arrangement comprises also a transfer line 13 intended to transfer the fuel from the secondary tank to the main fuel tank so that the fuel level in the main fuel tank will always be as high as or higher than in the secondary tank, thereby providing assurance that further fuel will always be available for transfer to the engine. The transfer of fuel from the secondary tank to the main fuel tank is effected via a venturi pipe 20 connected to a line 14 for return fuel from the engine. As the supply of fuel to the engine will always be somewhat greater than the engine's instantaneous consumption, the unconsumed fuel is led back to the tank via the line 14.

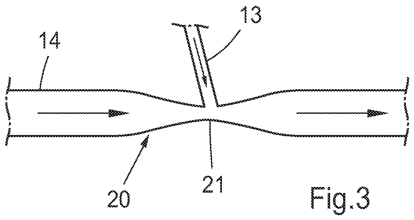

The venturi pipe 20, which is depicted in Figure 3, takes the form of a section 21 with reduced cross-sectional area relative to the line 14. The reduced cross-section generates a velocity increase through the section 21, resulting in a suction action in the line 13 which is connected to the section 21. Fuel from the secondary tank is thereby moved via the line 13 to the section 21, where it joins the return fuel and goes on to the main fuel tank 11 via the line 14.

There also runs between the main fuel tank 11 and the secondary tank 12 a drain hose 15 which drains fuel from the main tank if the tank is full, so that no positive pressure will occur in the main tank, which positive pressure might lead to leakage at the vent and connections of the main tank. The drain hose runs between the respective tank bottoms in order to be situated below the fuel level to the greatest possible extent and equalise the fuel levels in the tanks by siphon action.

The main fuel tank and the secondary fuel tank are usually of rather similar volume, but in embodiments which comprise a plurality of secondary tanks the volume of each of the latter may be reduced.

The drawing also depicts various other parts, e.g. fastening devices 30 for robust fastening of the tanks 11, 12 to suitable portions of the vehicle's loadbearing structure, a portion of a line 16 for conveying fuel from the main tank to an engine, and an element 17 connected thereto which comprises a suitable filter 18 for receiving fuel for the engine.

Figure 2 depicts an arrangement according to the invention. In addition to the components already described above which are also present in this embodiment, an extension pipe 40 is provided in the secondary tank at the connection of the drain hose in the bottom of the secondary tank. The pipe is connected to the drain hose in such a way that no leakage will occur at the connection, with the result that the orifice of the drain hose is relocated to serve as the end of the pipe. The pipe is directed substantially vertically upwards from the bottom of the secondary tank and reaches a predetermined height above the bottom of the tank. The advantage of this version is that if the fuel tanks are situated at substantially the same vertical level in the vehicle, the fuel levels in the main and secondary tanks will be substantially the same so long as the levels in the secondary tank and the main tank are higher than the orifice of the extension pipe as a result of the equalising drainage flow provided by siphon action between the fuel in the respective tanks. When, after a period of consumption, the level in the main fuel tank falls below the level of the orifice of the extension pipe, the equalising siphon action will cease to drain fuel from the main tank to the secondary tank, and the remaining fuel in the secondary tank will then be transferred to the main tank before being finally conveyed to the engine. The length of the extension pipe thus controls the time when the secondary tank will be emptied to the benefit of the main tank, and said length will therefore depend on the sizes of the tanks and the expected mode of use of the vehicle in which the arrangement is provided. If the main fuel tank and the secondary tank are situated at different heights in the vehicle, this has to be taken into account in the dimensioning of the length of the pipe.

Although described above on the basis of some exemplifying embodiments, the invention is not limited to them but is defined on the basis of the accompanying claims.

## Claims

1. An arrangement for transfer of fuel from a secondary tank (12) to a main tank (11), which arrangement comprises:
- a main tank (11) intended to contain fuel for an engine,
- one or more secondary tanks (12) intended to contain fuel,
- a transfer line (13) intended for transfer of fuel from the respective secondary tank (12) to the main tank (11), and
- a line (14) intended to carry return fuel back from the engine to the main tank (11) whereby fuel is transferred from the secondary tank (12) or secondary tanks to the main tank (11) via a venturi pipe (20) connected along the return fuel line (14), and that the transfer line (13) or transfer lines is/are so connected to the venturi pipe (20) that fuel is thereby sucked from the secondary tank (12) or secondary tanks to the main tank (11), thus providing assurance that the fuel in the secondary tank (12) or secondary tanks will be transferred to the main tank (11),
**characterised in that** a drain hose (15) runs from the bottom of the main tank (11) to the bottom of the secondary tank (12) or secondary tanks where a substantially vertically directed pipe (40) is so connected to the connection of the drain hose (15) in the bottom of the secondary tank that the outlet of the hose is relocated somewhat upwards relative to the bottom of the respective secondary tank and that the main tank (11) and the secondary tank (12) are situated at substantially the same height.

2. An arrangement according to claim 1, **characterised in that** the transfer line (13) or lines is/are connected to the bottom(s) of the respective secondary tank(s) (12) near to the latter's lowest position.

3. A vehicle provided with an arrangement for transfer of fuel from one or more secondary tanks (12) to a main tank (11) according to any one of the foregoing claims.

## Patentansprüche

1. Anordnung zum Übertragen von Kraftstoff von einem Sekundärtank (12) zu einem Haupttank (11), wobei die Anordnung umfasst:
- einen Haupttank (11), der dazu vorgesehen ist, Kraftstoff für einen Motor zu enthalten,
- einen oder mehrere Sekundärtanks (12), die dazu vorgesehen sind, Kraftstoff zu enthalten,
- eine Übertragungsleitung (13), die zum Übertragen von Kraftstoff von dem jeweiligen Sekundärtank (12) zu dem Haupttank (11) vorgesehen ist, und
- eine Leitung (14), die dazu vorgesehen ist, Rücklaufkraftstoff von dem Motor zurück zu dem Haupttank (11) zu befördern, wobei Kraftstoff von dem Sekundärtank (12) oder den Sekundärtanks zu dem Haupttank (11) über ein entlang der Rücklaufkraftstoffleitung (14) verbundenes Venturi-Rohr (20) übertragen wird, und dass die Übertragungsleitung (13) oder Übertragungsleitungen derart mit dem Venturi-Rohr (20) verbunden ist bzw. sind, dass dadurch Kraftstoff von dem Sekundärtank (12) oder den Sekundärtanks zu dem Haupttank (11) gesaugt wird, wodurch eine Sicherheit vorgesehen ist, dass der Kraftstoff in dem Sekundärtank (12) oder den Sekundärtanks zu dem Haupttank (11) überführt wird,
**dadurch gekennzeichnet, dass**
sich ein Ablassschlauch (15) von dem Boden des Haupttank (11) zu dem Boden des Sekundärtanks (12) oder der Sekundärtanks erstreckt, wobei ein im Wesentlichen vertikal ausgerichtetes Rohr (40) derart mit dem Anschluss des Ablassschlauchs (15) in dem Boden des Sekundärtanks verbunden ist, dass der Auslass des Schlauchs relativ zu dem Boden des jeweiligen Sekundärtanks etwas nach oben versetzt ist, und dass der Haupttank (11) und der Sekundärtank (12) im Wesentlichen auf derselben Höhe angeordnet sind.

2. Anordnung nach Anspruch 1, **dadurch gekennzeichnet, dass** die Übertragungsleitung (13) oder die Übertragungsleitungen mit dem Boden des bzw. der jeweiligen Sekundärtanks (12) in der Nähe der niedrigsten Position des letzteren verbunden ist bzw. sind.

3. Fahrzeug, in dem eine Anordnung zum Übertragen von Kraftstoff von einem oder mehreren Sekundärtanks (12) zu einem Haupttank (11) nach einem der vorherigen Ansprüche vorgesehen ist.

## Revendications

1. Agencement pour le transfert de carburant d'un réservoir secondaire (12) à un réservoir principal (11), lequel agencement comprend :
- un réservoir principal (11) destiné à contenir du carburant pour un moteur,
- un ou plusieurs réservoirs secondaires (12) destinés à contenir du carburant,
- un conduit de transfert (13) destiné au transfert de carburant du réservoir secondaire (12) respectif au réservoir principal (11), et
- un conduit (14) destiné à renvoyer le carburant de retour du moteur au réservoir principal (11), le carburant étant transféré du réservoir secondaire ou des réservoirs secondaires (12) au réservoir principal (11) via un tube de Venturi (20) raccordé le long du conduit de carburant de retour (14), et le conduit de transfert ou les conduits de transfert (13) étant raccordé(s) au tube de Venturi (20) de manière telle que le carburant est aspiré du réservoir secondaire ou des réservoirs secondaires (12) au réservoir principal (11), ce qui garantit que le carburant dans le réservoir secondaire ou les réservoirs secondaires (12) sera transféré au réservoir principal (11),
**caractérisé en ce qu'**un tuyau d'écoulement (15) s'étend de la partie inférieure du réservoir principal (11) à la partie inférieure du réservoir secondaire ou des réservoirs secondaires (12) où un tube (40) orienté dans une direction sensiblement verticale est relié au raccord du tuyau d'écoulement (15) à la partie inférieure du réservoir secondaire de manière telle que la sortie du tuyau est reportée quelque peu vers le haut par rapport à la partie inférieure du réservoir secondaire respectif et que le réservoir principal (11) et le réservoir secondaire (12) sont situés sensiblement à la même hauteur.

2. Agencement selon la revendication 1, **caractérisé en ce que** le ou les conduits de transfert (13) est/sont raccordés à la ou aux partie(s) inférieure(s) du/des réservoir(s) secondaire(s) respectif(s) (12) à proximité de la position la plus basse de ces derniers.

3. Véhicule doté d'un agencement pour le transfert de carburant d'un ou plusieurs réservoirs secondaires (12) à un réservoir principal (11) selon l'une quelconque des revendications précédentes.
